(19) Europäisches Patentamt
European Patent Office
Office européen des brevets

(11) Numéro de publication: **0 068 307**
**B1**

(12) # FASCICULE DE BREVET EUROPEEN

(45) Date de publication du fascicule du brevet: **16.07.86**

(51) Int. Cl.⁴: **H 01 M 6/18**, H 01 M 4/36, H 01 M 4/58

(21) Numéro de dépôt: **82105276.8**

(22) Date de dépôt: **16.06.82**

(54) **Générateurs électrochimiques comportant un électrolyte solide formé par une composition vitreuse conductrice de cations.**

(30) Priorité: **17.06.81 FR 8111902**
**17.06.81 FR 8111903**

(43) Date de publication de la demande:
**05.01.83 Bulletin 83/1**

(45) Mention de la délivrance du brevet:
**16.07.86 Bulletin 86/29**

(84) Etats contractants désignés:
**AT BE CH DE FR GB IT LI LU NL SE**

(56) Documents cités:
**EP - A - 0 036 105**
**FR - A - 2 269 203**
**FR - A - 2 389 244**
**FR - A - 2 389 245**
**FR - A - 2 389 246**
**FR - A - 2 406 898**
**US - A - 4 144 384**

**SOLID STATE IONICS, vol. 1, no. 5,6, décembre 1980, pages 519-523, North-Holland Publishing Company, Amsterdam (NL); J.P. MALUGANI et al.: "Preparation and electrical properties of the 0,37Li2S-0,18P2S5-0,45LiI glass"**
**PATENTS ABSTRACTS OF JAPAN, vol. 5, no. 125, 12 août 1981, page 797 E-69;**

(73) Titulaire: **Société Anonyme dite SAFT, 156, avenue de Metz, F-93230 Romainville (FR)**

(72) Inventeur: **Duchange, Jean-Pierre, Le Bourg Nouaille Maupertuis, F-86340 La Villedieu du Clain (FR)**
Inventeur: **Gabano, Jean-Paul, 11, rue des Dames des Roches, F-86000 Poitiers (FR)**

(74) Mandataire: **Weinmiller, Jürgen et al, Zeppelinstrasse 63, D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 068 307 B1**

**Description**

La présente invention concerne des générateurs électrochimiques comportant un électrolyte solide formé par une composition vitreuse conductrice de cations selon le préambule de la revendication 1.

Un tel état de la technique est décrit dans le document «Solid State Ionics», vol. 1, N° 5 et 6, déc. 1980, pages 519 à 523. Le générateur connu est assemblé en comprimant les deux électrodes sur une couche de verre constituant l'électrolyte et répondant à la formule 0,18 $P_2S_5$ – 0,37 $Li_2S$ – 0,45 LiI.

On connaît en outre par les documents Fr-A 2 389 245, 2 269 203 et 2 389 246 des piles au lithium dont l'électrolyte est un solide cristallisé contenant un mélange de iodure de lithium, de l'hydroxyde de lithium et de l'oxyde d'aluminium.

L'invention a pour but de proposer un générateur du type défini dans le préambule de la revendication principale présentant une plus haute densité d'énergie que les générateurs conformes au document «Solid State Ionics» cité ci-dessus.

Ce but est atteint par le générateur tel qu'il est caractérisé dans la revendication 1. Certaines caractéristiques d'une mise en œuvre préférée de l'invention sont décrites dans les sous-revendications.

Dans le cas où les matériaux formant la matière active positive sont vitrifiables, de manière à permettre leur vitrification on introduit dans la matière active des particules de silice.

Ceci est notamment le cas des oxydes de plomb comme décrit dans la demande de brevet français n° 2 449 339, ainsi que du bismuthate de cuivre ou de plomb.

Tous les composés susceptibles de constituer la matière active positive et cités dans la revendication 1, se réduisent à une tension inférieure ou égale à 2,8 V, par rapport au lithium. Cette condition est essentielle car des mesures pratiques du potentiel de décomposition des compositions vitreuses décrites ci-dessus ont montré que leur domaine d'électroactivité était vraisemblablement lié à celui de l'iodure de lithium, ce qui théoriquement conduirait à une tension de décomposition de l'ordre de 2,8 V.

De plus, il a pu être constaté pour ces compositions que la recompression du matériau pulvérulent permettait d'approcher les valeurs de conductivités obtenues sur verre massif; des conductivités de l'ordre de $2{,}10^{-4}\Omega^{-1}$ $cm^{-1}$ ont pu être mesurées à 25 °C.

Le tableau ci-après indique pour chacun des composés susceptibles de constituer la matière active positive la capacité en $Ah/cm^3$ et la tension initiale, en volts, par rapport au lithium.

Ces divers matériaux cathodiques peuvent être classés en deux catégories, à savoir:

– Les composés donnant lieu à une réaction de réduction topochimique conduisant à une insertion d'ions lithium $Li^+$ dans la structure et susceptibles d'être régénérés par oxydation chimique ou électrochimique.

| Matériau cathodique | Capacité spécifique $Ah/cm^3$ | Tension initiale/Li en volts |
|---|---|---|
| $(CF)_x$ | 1,04 | 2,7–2,8 |
| $Cu_4O\ (PO_4)_2$ | 2,05 | 2,6–2,7 |
| $V_6O_{13}$ | 0,88 | 2,6–2,8 |
| $V_2S_5$ | 1,50 | 2,6–2,8 |
| $MoS_3$ | 1,9–2 | 2,0–2,2 |
| CuS | 2,4 | 2,2 |
| S | 3,48 | 2,2 |
| CuO | 4,31 | 2 |
| $Cu_3B_2O_6$ | 2,34 | 2 |
| $FeS_2$ | 4,46 | 1,8 |
| $Pb_3O_4$ | 2,84 | 1,5–1,6 |
| $Bi_2O_3$ | 2,95 | 1,6–1,7 |
| PbO | 2,28 | 1,4–1,5 |
| $BiO(CrO_4)_2$ | 0,7 | 2,7–2,8 |
| $AgBi(CrO_4)_2$ | 1,2 | 2,8 |
| $MoO_3$ | 1 | 2,6–2,8 |
| $TiS_2$ | 0,77 | 2,5–2,6 |
| $NiPS_3$ | 1,3 | 2 |
| $CuBi_2O_4$ | 3,54 | 1,8 |
| $Bi_2Pb_2O_5$ | 2,65 | 1,5–1,6 |

Par exemple:

$$V_6O_{13} + 3.9\,Li^+ + 3.9e \rightleftarrows V_6O_{13}\,Li_{3.9}$$
$$\text{ou } TiS_2 + Li^+ + e \leftrightarrows TiS_2Li$$

– Les composés donnant lieu à une réaction de réduction non topochimique, conduisant à la formation de l'état métallique des divers matériaux envisagés, non régénérables généralement par réaction inverse, mais susceptibles de conduire à des capacités spécifiques nettement plus élevées que dans le cas précédent tels par exemple:

$$Cu_4O\ (PO_4)_2 + 8\,Li^+ + 8e \rightarrow 4\,Cu + Li_8O\ (PO_4)_2$$
$$\text{ou } + Li_2O + 2\,Li_3PO_4$$
$$\text{ou } CuBi_2O_4 + 8\,Li^+ + 8e \rightarrow Cu + 2Bi + 4Li_2O$$

De tels matériaux sont bien adaptés pour la constitution de générateurs primaires à haute densité d'énergie.

L'électrolyte préféré pour les générateurs conformes à l'invention a la composition suivante:

0,37 $Li_2S$, 0,18 $P_2S_5$, 0,45 LiI

Pratiquement des générateurs, conformes à l'invention, peuvent être constitués par un empilement de pastilles comprimées d'électrolyte solide prises de façon appropriée en sandwich entre une pastille de lithium et une cathode.

Par ailleurs, un des problèmes principaux soulevés par les éléments à électrolyte solide, outre le choix d'un électrolyte approprié jouant le rôle de séparateur entre les deux électrodes, est la continuation du transport ionique des espèces $Li^+$ au sein de la cathode, indispensable pour assurer la réduction complète de la matière active cathodique.

Conformément à l'invention, une solution est apportée à ce problème en incorporant des particules d'électrolyte solide dans le compartiment cathodique.

La présente invention sera mieux comprise en se rapportant à la description qui va suivre, relative à des générateurs électrochimiques dont la matière active négative est à base de lithium et la matière active positive à base de $Cu_4O\ (PO_4)_2$ ou de $FeS_2$, ou de $Bi_2O_4Cu$.

Dans le dessin annexé:

– la figure 1 représente schématiquement en coupe un mode de réalisation d'une pile selon l'invention,

– la figure 2 représente les courbes de polarisation à différentes températures pour une pile dont la matière active positive est $Cu_4O(PO_4)_2$,

– la figure 3 représente des courbes de décharge à différentes températures de la pile de la figure 2,

– la figure 4 représente la courbe de polarisation d'une pile selon l'invention dont la matière active positive est $FeS_2$,

– la figure 5 représente la courbe de polarisation d'une pile selon l'invention dont la matière active positive est $Bi_2O_4Cu$,

– la figure 6 montre la courbe de décharge à 25 °C d'une pile $Li/TiS_2$ selon l'invention.

L'électrolyte solide répond à la formule de la composition vitreuse $aP_2S_5$, $bLi_2S$, $cLiX$, dans laquelle X représente le chlore, le chrome, ou l'iode, et a, b, et c représentent des nombres choisis de telle sorte que le rapport $\frac{b}{a+b}$ soit compris entre 0,61 et 0,70 et le rapport $\frac{c}{a+b+c}$ soit inférieur ou égal à une limite correspondant à la solubilité en phase vitreuse de LiX dans le composé $aP_2S_5$, $bLi_2S$.

Plus précisément, on a utilisé un électrolyte de formule:

$$0{,}18\ P_2S_5, \quad 0{,}37\ Li_2S, \quad 0{,}45\ LiI$$

qui présente sous forme de poudre recompactée une conductivité voisine de $2{,}10^{-4}\Omega^{-1}\ cm^{-1}$ à température ambiante.

Dans un premier mode d'exécution, la pastille cathodique a été réalisée, conformément à l'invention, à partir d'un mélange comportant les proportions pondérales suivantes:

| | |
|---|---|
| $CU_4O\ (PO_4)_2$ | 45% |
| Electrolyte solide | 50% |
| Graphite | 5% |

Sur la figure 1, la référence 6 désigne le boîtier de la cathode, en acier inoxydable, dans lequel est disposée la pastille cathodique 1, présentant la composition mentionnée ci-dessus.

La pastille cathodique 1 est surmontée d'une pastille d'électrolyte 2.

L'ensemble pastille cathodique, pastille d'électrolyte est préparé de la manière suivante.

La pastille cathodique est formée dans une matrice en acier sous une pression d'environ 750 kg/cm².

La poudre d'électrolyte solide est répandue sur la couche cathodique et l'ensemble est comprimé sous une pression de 3000 kg/cm². L'ensemble cathode/électrolyte est ensuite introduit dans le boîtier cathodique, puis on place un disque de lithium 3 au contact de l'électrolyte. La coupelle anodique 7 en acier inoxydable comporte un ressort 4, type élastomère, qui permet d'exercer une pression isostatique sur l'empilement précédent et dont le but est de maintenir la cohésion aux divers interfaces au cours de la décharge de la pile, en comblant le volume de vide créé par la disparition du lithium. La connexion électrique avec la coupelle anodique est assuré par un système 5 de deux agraphes traversent le ressort élastomère et épousant parfaitement les déformations de celui-ci; un joint 8 est interposé entre les coupelles cathodiques 6 et anodique 7. Le sertissage de la pile permet d'exercer sur l'ensemble cathode/électrolyte/anode une pression suffisante indispensable au bon fonctionnement du générateur.

Les caractéristiques géométriques des divers éléments constitutifs de la pile sont les suivants:

| | | |
|---|---|---|
| – Anode de lithium: | diamètre | = 8 mm |
| | épaisseur | = 0,5 mm |
| – Electrolyte solide: | diamètre | = 10,8 mm |
| | épaisseur | = 0,4 mm |
| – Cathode: | diamètre | = 10,8 mm |
| | épaisseur | = 0,4 mm |

Surface active (déterminée par la surface du disque de lithium) = 0,5 cm².

Capacité de la pile (limitée par la capacité cathodique): environ 25 mAh.

La figure 2 représente les courbes de polarisation de la pile décrite ci-dessus, à 25 et 70 °C. La tension V de la pile, en volts, à été portée en ordonnées et la densité de courant A, en μA/cm², en abscisses.

La référence (B) désigne la courbe obtenue à 25 °C, la référence (C) celle obtenue à 70 °C.

La tension en circuit ouvert est voisine de 2,72 V. Les courbes courant-tension de l'élément ainsi testé montrent le bon comportement du système jusqu'à 400 μA/cm² sans polarisations excessives. Ces courbes sont relatives à des éléments non déchargés et représentent en conséquence les caractéristiques spécifiques initiales du système.

Les caractéristiques de décharge ont été également testées sur ces éléments.

La figure 3 représente les courbes de décharges obtenues pour la pile décrite ci-dessus à 25 °C (courbe D) et 70 °C (courbe E). La tension V de la pile, en volts, a été portée en ordonnées et la profondeur de décharge P, en %, en abscisses. Pour ces courbes on avait I = 100 μA (soit 200 μA/cm²).

Ces courbes mettent en évidence les propriétés remarquables de l'oxyphosphate de cuivre aussi bien du point de vue de la capacité spécifique que de la cinétique de décharge.

Par ailleurs le courant de court-circuit des piles $Li/Cu_4O\ (PO_4)_2$ est de l'ordre de 8 mA soit 16 mA/cm² rapporté à la surface active des électrodes, indiquant par là même l'intérêt que peut présenter

un tel couple notamment lorsque l'on considère son comportement en régime impulsionnel.

Dans un second mode d'exécution on a remplacé la pastille cathodique du premier mode d'exécution par une pastille obtenue à partir d'un mélange $FeS_2$, électrolyte solide et graphite dans les proportions suivantes en pourcentage en masse:

| | |
|---|---|
| – $FeS_2$ | 51% |
| – électrolyte solide | 40% |
| – graphite | 9% |

Les autres paramètres de construction sont inchangés (diamètre, épaisseurs, pression de compression etc...).

La capacité de la pile est limitée par la capacité anodique $\simeq$50 mAh, la capacité de la cathode est de 75 mAh (le disulfure de fer a une forte capacité volumique $\simeq$4,4 Ah/cm$^3$).

La pile au lithium disulfure de fer est illustrée par les résultats obtenus sur la courbe de polarisation (F) représentée sur la figure 4.

Dans un troisième mode de réalisation, la pastille cathodique a été réalisée à partir d'un mélange comportant les proportions pondérales suivantes:

| | |
|---|---|
| $Bi_2O_4Cu$, 0,7 $SiO_2$ | 68% |
| Electrolyte solide | 25% |
| Graphite | 7% |

(Les autres paramètres de construction sont inchangés (diamètre, épaisseurs, pression de compression etc...).

La capacité de la pile (limitée par la capacité anodique) est environ 50 mAh, la capacité de la cathode étant d'environ 60 mAh.

La figure 5 représente la courbe de polarisation de la pile décrite ci-dessus. La tension V de la pile, en volts, a été portée en ordonnées et la densité de courant A, en µA/cm$^2$ en abscisses.

Les caractéristiques de décharge ont également été testées sur des éléments, ainsi on a fait quelques essais sur le couple Li/$TiS_2$; dans ce dernier cas la capacité de la pile, limitée par la capacité cathodique, utilisant une cathode ayant les mêmes caractéristiques dimensionnelles que celles du bismuthate de cuivre conduit à une valeur de 9 mAh.

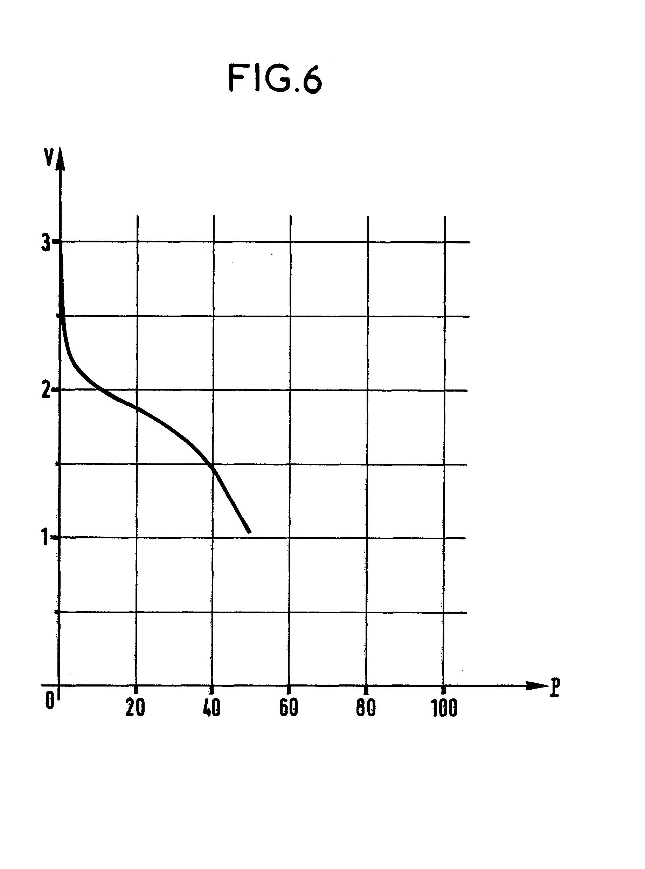

Sur la figure 6 on a représenté la courbe de décharge à 25 °C pour le couple Li/$TiS_2$. La tension V de l'élément, en volts, a été portée en ordonnées, la profondeur de décharge P, en %, en abscisses. Pour cette courbe on a $I = 15$ µA (soit 30 µA/cm$^2$).

La matière active positive peut, conformément à l'invention, comprendre plusieurs composés du groupe défini ci-dessus dans des proportions bien déterminées pour induire un certain nombre de propriétés intéressantes à savoir: création de paliers au cours de la décharge, recherche d'un profil particulier pour les caractéristiques de décharge, signal de fin de décharge, etc...

Ainsi, on peut incorporer $V_6O_{13}$ à $Cu_4O\ (PO_4)_2$ afin de conférer à l'ensemble une possibilité de semi-rechargeabilité exigée par certaines applications.

Une telle association permet en effet de trouver un compromis entre matières actives réversibles du type composé d'insertion, mais en général à faible capacité volumique, et matières actives non réversibles à forte capacité volumique du type précédemment indiqué. Les proportions sont à définir en fonction de l'optimisation recherchée.

Enfin, il est également possible, dans les générateurs conformes à l'invention, de remplacer le lithium par certains de ses alliages, en particulier Li-Al.

Bien entendu l'invention n'est nullement limitée aux modes de réalisation décrits et représentés qui n'ont été donnés qu'à titre d'exemples.

## Revendications

1. Générateur électrochimique dont la matière active négative est à base de lithium, dont l'électrolyte est une composition vitreuse conductrice de cations répondant à la formule $aP_2S_5$, $bLi_2S$, $cLiX$, dans laquelle a, b, et c représentent des nombres choisis de telle sorte que le rapport $\frac{b}{a+b}$ soit compris entre 0,61 et 0,70 et le rapport $\frac{c}{a+b+c}$ soit inférieur ou égal à une limite correspondant à la solubilité en phase vitreuse de LiX dans le composé $aP_2S_5$, $bLi_2S$, X représentant le chlore, le brome ou l'iode, caractérisé par le fait que la matière active positive se présente sous forme de poudre comprimée d'au moins un composé choisi dans le groupe formé par $MoO_3$, $WO_3$, $TiS_2$, $NiPS_3$, $I_2$, le bismuthate de cuivre ou de plomb, $(CF)_x$, $Cu_4O\ (PO_4)_2$, $V_6O_{13}$, $V_2S_5$, $MoS_3$, CuS, S, CuO, $Cu_3B_2O_6$, $FeS_2$, $Pb_3O_4$, $Bi_2O_3$, PbO, $BiO(CrO_4)_2$, $AgBi(CrO_4)_2$ et que des particules d'électrolyte sont dispersées au sein de ladite matière active.

2. Générateur selon la revendication 1, caractérisé par le fait que la matière active positive comporte, en volume, entre 20 et 80% d'électrolyte solide.

3. Générateur selon l'une des revendications précédentes, caractérisé par le fait que la matière active positive contient, sous forme dispersée, des particules d'un conducteur électronique.

4. Générateur selon l'une des revendications précédentes, caractérisé par le fait que la matière active positive est choisie dans le groupe formé par les oxydes de plomb, les bismuthates de cuivre et de plomb et qu'elle contient des particules de silice.

5. Générateur selon la revendication 4, caractérisé par le fait que la matière active positive est réalisée à partir d'un mélange pulvérulent comportant en poids

| | |
|---|---|
| $CuBi_2O_4$, 0,7 $SiO_2$ | 68% |
| Electrolyte solide | 25% |
| Graphite | 7%. |

6. Générateur selon l'une des revendications précédentes, caractérisé par le fait que l'électrolyte répond à la formule suivante:

$$0{,}18\ P_2S_5,\quad 0{,}37\ Li_2S,\quad 0{,}45\ LiI.$$

## Claims

1. An electrochemical generator comprising an active negative material based on lithium and as electrolyte a cation conducting vitreous composition corresponding to the formula $aP_2S_5$, $bLi_2S$, $cLiX$, wherein a, b and c are numbers selected in such a way that the ratio $b/(a+b)$ is between 0.61 and 0.70 and the ratio $c/(a+b+c)$ is lower or equal a limit corresponding to the solubility of LiX in vitreous phase in the compound $aP_2S_5$, $bLi_2S$, wherein X represents chlorine, bromine or iodine, characterized in that the active positive material is present in form of a compressed powder consisting of at least one compound selected from the group which consists of $MoO_3$, $WO_3$, $TiS_2$, $NiPS_3$, $J_2$, copper or lead bismuthate, $(CF)_x$, $Cu_4O(PO_4)_2$, $V_6O_{13}$, $V_2S_5$, $MoS_3$, CuS, S, CuO, $Cu_3B_2O_6$, $FeS_2$, $Pb_3O_4$, $Bi_2O_3$, PbO, $BiO(CrO_4)_2$, $AgBi(CrO_4)_2$, and that the electrolyte particles are dispersed in the body of said active material.

2. A generator according to claim 1, characterized in that the positive active material comprises between 20 and 80% by volume of the solid electrolyte.

3. A generator according to one of the preceding claims, characterized in that the positive active material contains particles of an electronic conductor dispersed therein.

4. A generator according to one of the preceding claims, characterized in that the positive active material is selected from the group consisting of lead oxides, cooper and lead bismuthates and that it contains particles of silica.

5. A generator according to claim 4, characterized in that the positive active material is prepared from a powder mixture comprising:

| | |
|---|---|
| $CuBi_2O_4$, 0.7 $SiO_2$ | 68% by weight |
| solid electrolyte | 25% by weight |
| graphite | 7% by weight. |

6. A generator according to one of the preceding claims, characterized in that the electrolyte corresponds to the following formula:

$$0.18\ P_2S_5,\quad 0.37\ Li_2S,\quad 0.45\ LiJ.$$

## Patentansprüche

1. Elektrochemischer Generator, dessen negatives aktives Material ein solches auf Basis von Lithium ist, dessen Elektrolyt eine kationenleitende glasartige Zusammensetzung ist, die der Formel $aP_2S_5$, $bLi_2S$, $cLiX$ entspricht, worin a, b und c Zahlen darstellen, die so gewählt werden, dass das Verhältnis $b/(a+b)$ zwischen 0,61 und 0,70 und das Verhältnis $c/(a+b+c)$ unterhalb oder an einem Grenzwert liegt, der der Löslichkeit von LiX in der Glasphase in der Verbindung $aP_2S_5$, $bLi_2S$ entspricht, wobei X Chlor, Brom oder Jod darstellt, dadurch gekennzeichnet, dass das positive aktive Material vorliegt in Form eines komprimierten Pulvers aus mindestens einer Verbindung, die ausgewählt wird aus der Gruppe, die gebildet wird von $MoO_3$, $WO_3$, $TiS_2$, $NiPS_3$, $J_2$, dem Kupfer- oder Bleiwismutat, $(CF)_x$, $Cu_4O(PO_4)_2$, $V_6O_{13}$, $V_2S_5$, $MoS_3$, CuS, S, CuO, $Cu_3B_2O_6$, $FeS_2$, $Pb_3O_4$, $Bi_2O_3$, PbO, $BiO(CrO_4)_2$, $AgBi(CrO_4)_2$, und dass Elektrolytteilchen im Innern des aktiven Materials dispergiert sind.

2. Generator nach Anspruch 1, dadurch gekennzeichnet, dass das positive aktive Material zwischen 20 und 80 Volumenprozent eines festen Elektrolyten umfasst.

3. Generator nach einem der vorhergehenden Ansprüche, dadurch gekennzeichnet, dass das positive aktive Material Teilchen eines Elektronenleiters in dispergierter Form enthält.

4. Generator nach einem der vorhergehenden Ansprüche, dadurch gekennzeichnet, dass das positive aktive Material ausgewählt wird aus der Gruppe, die gebildet wird durch die Oxide von Blei, die Wismutate von Kupfer und Blei, und dass es Kieselerdeteilchen enthält.

5. Generator nach Anspruch 4, dadurch gekennzeichnet, dass das positive aktive Material hergestellt wurde aus einem pulverförmigen Gemisch, das enthält:

| | |
|---|---|
| $CuBi_2O_4$, 0,7 $SiO_2$ | 68 Gew.% |
| fester Elektrolyt | 25 Gew.% |
| Graphit | 7 Gew.% |

6. Generator nach einem der vorhergehenden Ansprüche, dadurch gekennzeichnet, dass der Elektrolyt der folgenden Formel entspricht:

$$0{,}18\ P_2S_5,\quad 0{,}37\ Li_2S,\quad 0{,}45\ LiJ.$$

FIG.1

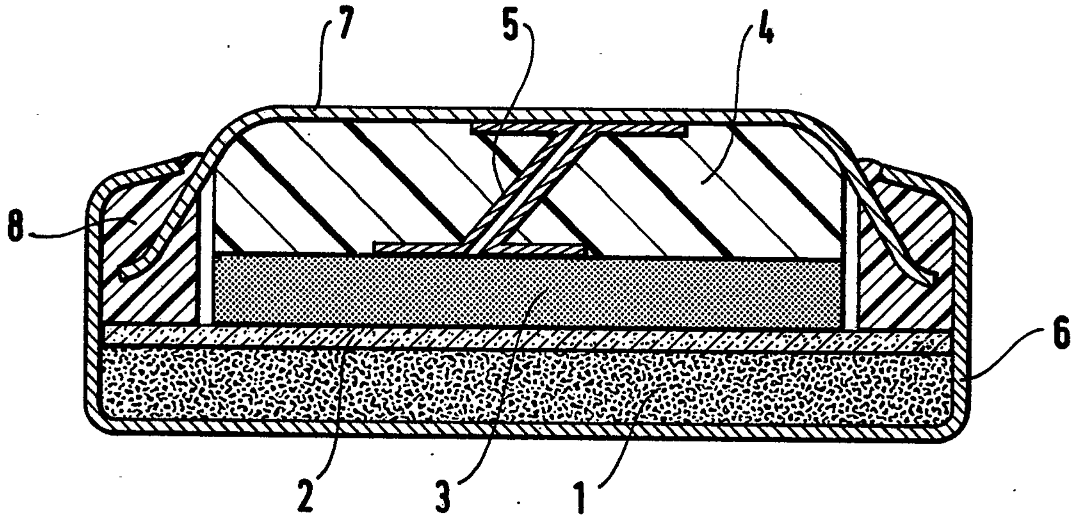


FIG.2

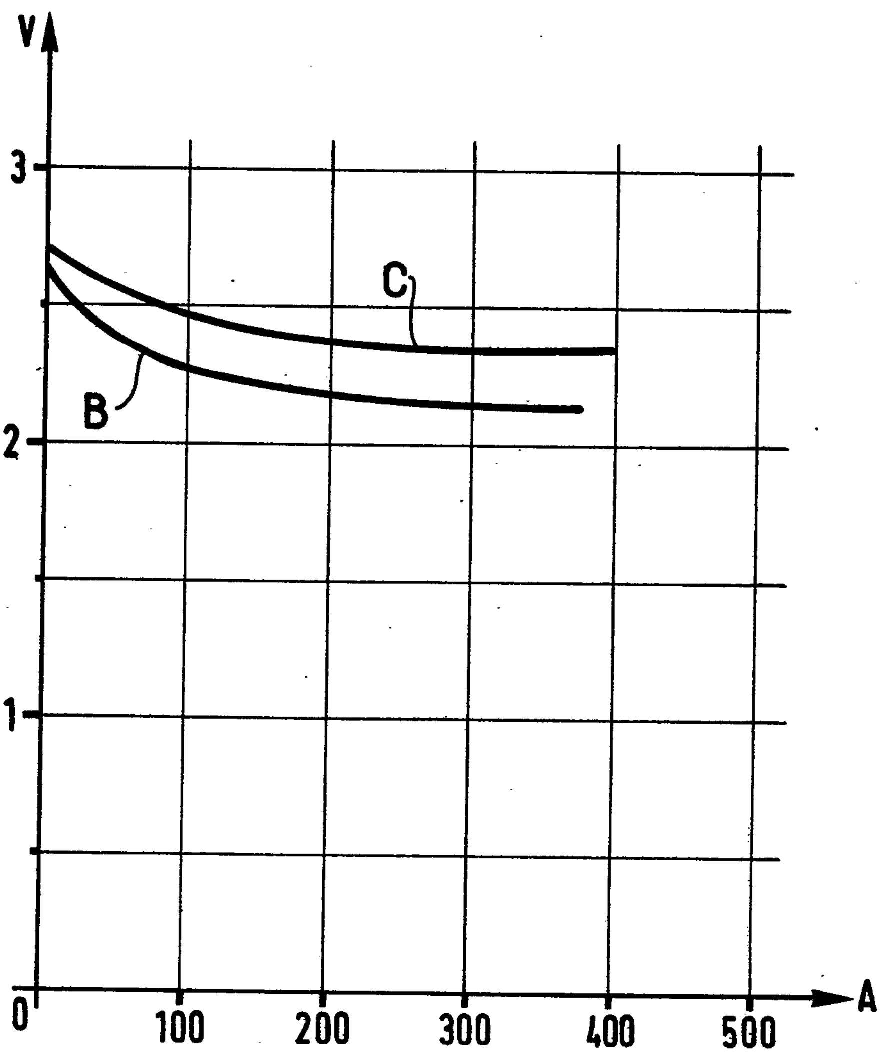

FIG. 3

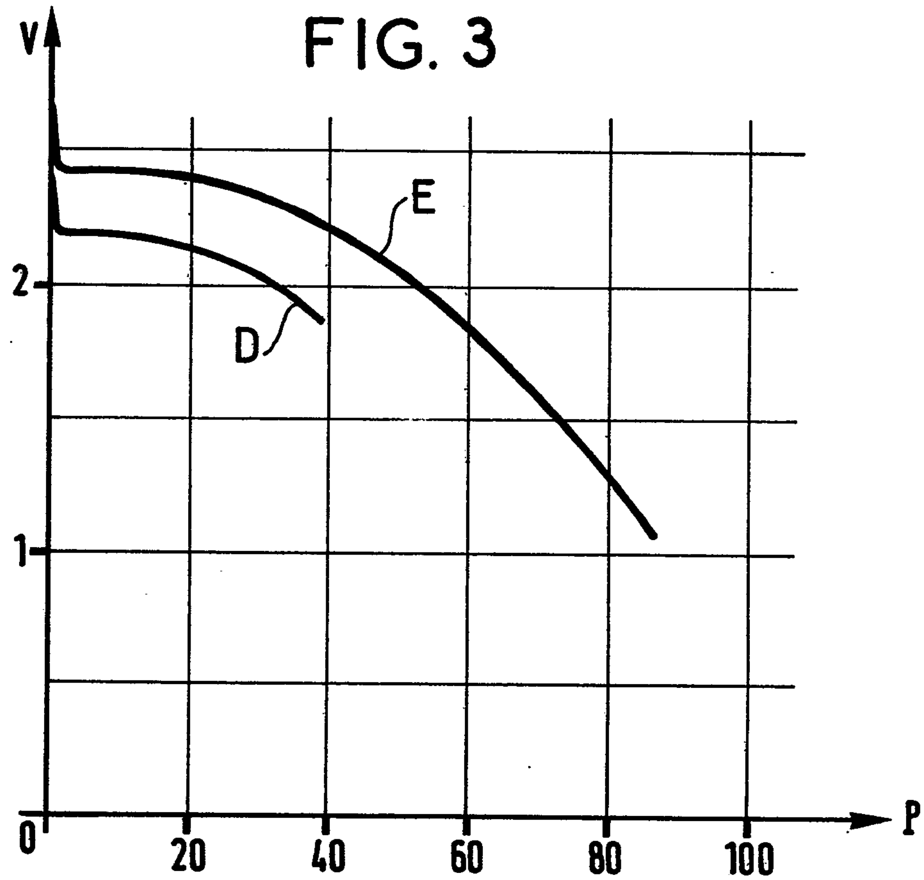


FIG. 4

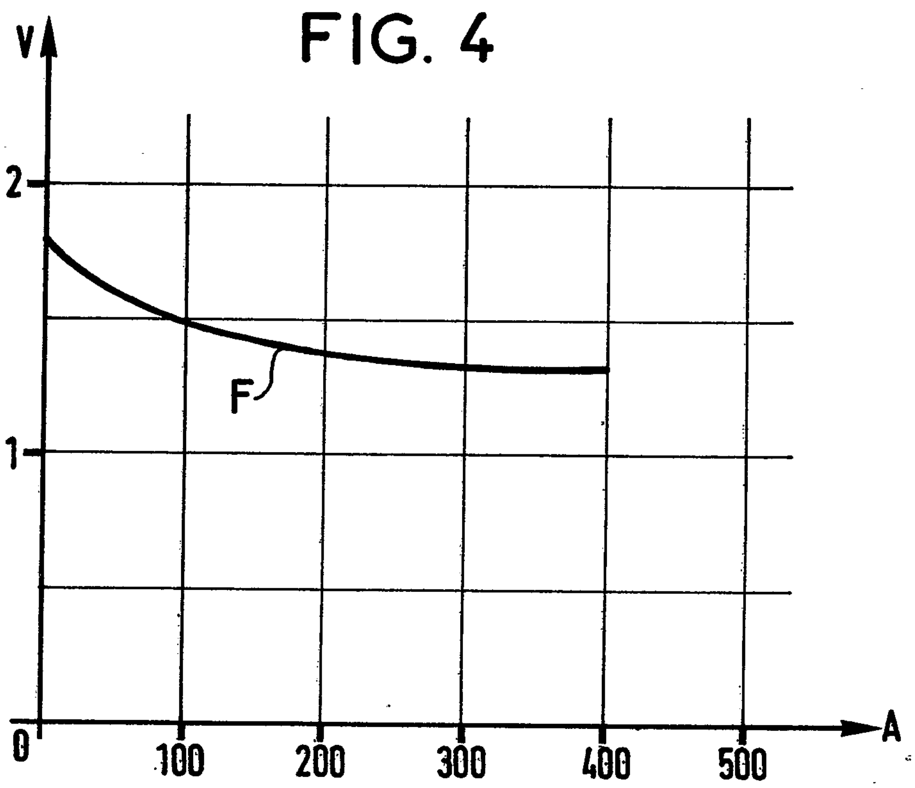

FIG.5

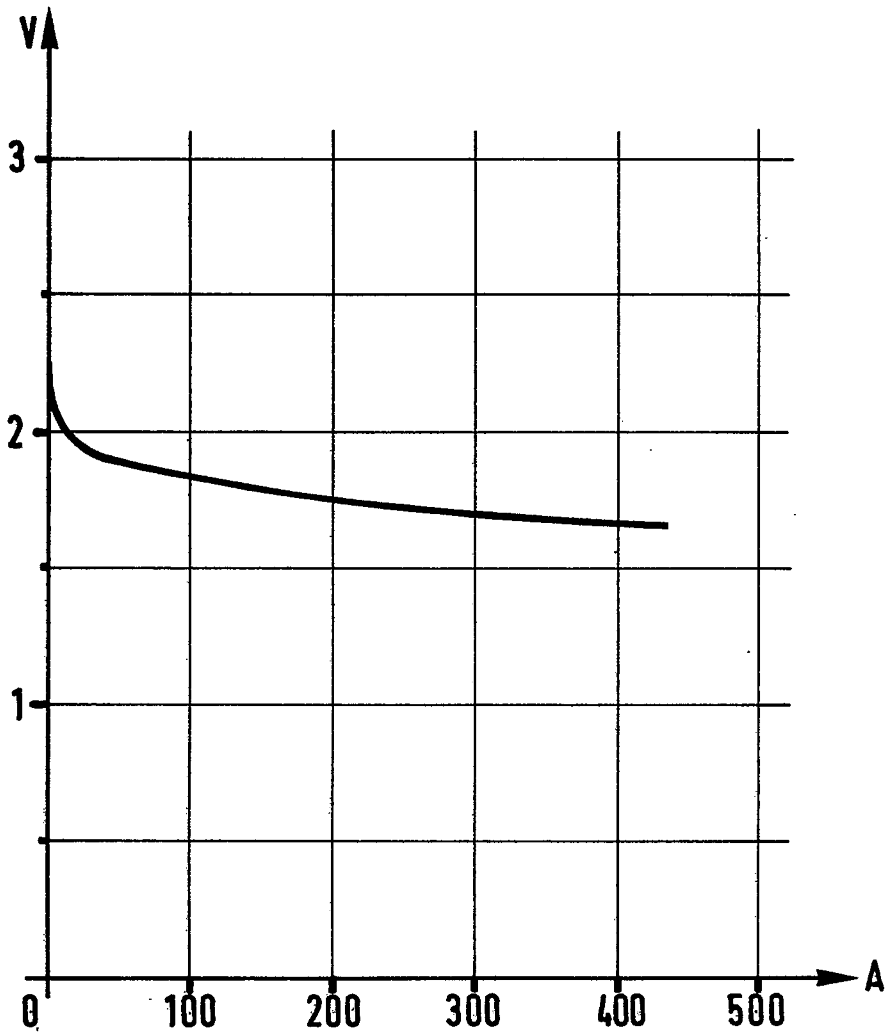

FIG.6